# EUROPEAN PATENT APPLICATION

(11) **EP 1 160 205 A1**
(43) Date of publication of application: **05.12.2001**
(21) Application number: 01112690.1
(22) Date of filing: 25.05.2001
(51) Int. Cl.: C02F 1/56

(54) **Method of treating contaminated liquid**

(30) Priority: 01.06.2000 IL 13651900
(71) Applicant: Ben Gurion University Of The Negev Research And Development Authority, 84105 Beer Sheva (IL)
(72) Inventor: Cohen, Ephrain, Levahin (IS); Sintov, Amnon, Omer (IS); Shabtai, Yossef, 47205 Ramat Hasharon (IS)
(74) Representative: Hughes, Siân Victoria

(57) **Abstract**

A process for treating contaminated liquid, in which the liquid to be treated is contacted with a charged polymeric material and with a second, oppositely charged polymeric material. The polymeric materials are soluble in the liquid, and at least one of the soluble polymeric materials is a branched polymeric material. Floc formation is allowed and the flocs are separated from the liquid. The first and second polymeric materials may be selected from the group consisting of polysaccharides, proteins, lipids and polyhydroxy alcohols.

## Description

### Field of the Invention

The present invention is concerned with the use of polymers in the treatment of contaminated liquid. In particular, the invention relates to a process for purifying contaminated liquid using a combination of two, oppositely charged polymers as flocculating agents.

### Background of the Invention

Realization has grown in recent years that water pollution has become a critical problem the world over. The tremendous increase in the production of synthetic chemicals and sophisticated consumer products has introduced toxic and carcinogenic pollutants into the water environment. Furthermore, ever increasing amounts of domestic, industrial and agricultural waste streams containing pollutants are being discharged into rivers and lakes and are finding their way, by seepage, into underground water resources. The problem is severe in countries blessed with abundant fresh water resources and even more so in arid countries like Israel. In the latter countries, in particular, the widespread pollution of water resources will have a disastrous effect in that it will reduce still further the already limited quantities of usable water. This situation has given rise to the urgent necessity, throughout the world, to clean natural water resources of pollutants. One solution to the problem lies in the collection and purification of the polluted water, which may then be reused for different purposes.

Currently, industrial wastewater is treated by the use of multi-technological processing, including the degradation and removal of harmful components from the industrial wastewater by chemical or biological means and the discharge of the treated water. Problems associated with this approach are:
1. Biodegradation processes are extremely slow as a result of the toxic effect exerted by a mixture of organic compounds and a variety of heavy metals on the capable decomposing microorganisms.
2. The treatment costs lead to resistance in their implementation by manufacturers as reflected in lobbying of policy makers and illegal discharge of wastes to the environment.
3. Finding methods of disposal of the concentrates, sludge, etc. containing the harmful components left behind after treating the waste streams.
   Water pollutants may comprise a diverse range of substances - organic and inorganic chemicals, plant nutrients (nitrogen and phosphorous), toxic substances, and disease-causing vectors (bacteria, protozoa and viruses). Therefore, the removal of pollutants from the water requires a diversity of treatments, which may be divided into three groups:
   1) Primary treatment, in which solid materials are separated out mechanically by screening devices or by settling in basins or tanks, and/or oxygen-demanding substances (biological oxygen demand - BOD) and turbidity-producing colloids are removed by physicochemical treatment;
   2) Secondary treatment, an aerobic stage, in which the action of bacteria and other microorganisms is exploited for the oxidation of soluble or colloidal organic material;
   3) Tertiary treatment, in which the solid materials resulting from primary and secondary treatment are digested under anaerobic conditions to gases, liquids and nondigestible organic material.

The first stage in the purification of contaminated water is the removal of the suspended solids and colloids. This is usually achieved by coagulation with iron salts (ferric sulfate or ferric chloride) and aluminum, lime or synthetic organic polyelectrolytes (polyacrylamide). The latter polycationic chemicals form complex bridges between the negatively charged colloids and the suspended solid materials, resulting in aggregation and sedimentation. The use of chemicals such as aluminum, iron and synthetic polymers in the treatment of drinking water is problematic, since these substances are potentially hazardous to health and to the environment. Even though these chemicals precipitate out of solution in the form of flocs, significant amounts remain in the water, after removal of said flocs. Aluminum sulfate, for example, can react with suspended particulate matter in natural water bodies to form soluble aluminum, which may give rise to toxicological problems in aquatic environments. Birchall, J.D. *et al*., (1989) [Nature 338: 146] have shown that increased levels of aluminum in acidified natural waters is the primary cause of the death of fish as a result of damage to gill epithelia and loss of osmoregulatory capacity. Similarly, increased concentrations of silicon and aluminum in water supplies have been implicated in the etiology of Alzheimer's disease, since silicon and aluminum complexes have been detected in the neurofibrillary tangle and senile plaque in the brains of patients with this disease [Hershey, C.O. *et al.* (1983) Neurology 33: 1350-1353]. The inorganic flocculants are, however, often approved for use in the purification of drinking water due to a lack of a better alternative.

Several new technologies for wastewater treatment have been developed. One of these is based on the use of algae (growing cells or dead cells) for the removal of heavy metals and organic contaminants from wastewater. The use of live or dead algal cells as flocculating agents for metals is described in a number of publications [De la Noue, J. & De Pauw, N. (1988) Biotech. Adv. 6: 725-770; Kierstan, M.P.J. & Coughan, M.P. (1985) pp. 39-48 In "Immobilized cells and enzymes: a practical approach", J. Woodward, ed., IRL Press, Oxford; Oswald, W.J. (1988) pp. 305-328 in "Microalgal Biotechnology", M.A. Borowitzka & L.J. Borowitzka, eds., C.U.P., Cambridge]. There have also been reports concerning bioflocculants isolated from algae. Avnimelech, Y. et al., 1982 [Science 216: 63-65], for example, describe algal species that produce high molecular weight polymers that flocculate suspended bentonite particles in the presence of inorganic divalent cations.

Weir, S. et al.., 1993 [Biotechnol. Tech. 7: 111-116] describe the successful flocculation of microorganisms with the use of the cationic flocculant chitosan.

Membrane filtration technology is increasingly being used in a variety of purification processes. Much progress has been made during the last two decades in developing membrane systems with high selectivity, excellent stability, durability, and operational performance. However there are some crude waste feeds that are refractory to membrane filtration treatments, primarily because of fouling of the membranes by particulate waste. The fouling phenomena that accompany membrane filtration, especially with biologically originated materials, seek a solution. Fouling is generally caused by both hydrophobic material and electrolytes or polyelectrolytes (proteins, oily substances, humic acids, charged organic compounds etc.) which bind to the membranes and eventually cause deterioration of fluxes. The introduction of de-fouling treatment is a cardinal course in membrane technology. One aspect is the alteration of membrane surfaces during their fabrication to match a specific and rather narrow range of target applications. Another is the pretreatment of the material(s) to be filtered in order to prevent or minimize fouling of membrane and deterioration of their original performance.

It is an object of the present invention to provide an efficient method for purifying contaminated water that is based on the use of non-toxic flocculating agents.

It is another object of the invention to provide a method of liquid purification that results in the flocculation of many types of contaminants, including organic and inorganic compounds, metals and ions.

Other objects and advantages of the invention will become apparent as the description proceeds.

### SUMMARY OF THE INVENTION

It has now been surprisingly found that combinations of two oppositely-charged polymeric materials, wherein at least one of said polymeric materials is branched, and wherein said polymeric materials are preferably derived from a variety of natural sources (for example, algae, bacterial, and so on) are effective in removing organic compounds, inorganic compounds, metals and particulate matter from contaminated liquid. Unexpectedly, it was found that use of the aforementioned polymeric materials as the sole treatment agents results in high efficiency decontamination of contaminated liquid, without the need for the use of undesirable synthetic compounds or ions.

By the term 'polymeric material' is meant a single polymer or a mixture of polymers, each polymer in said mixture having the same charge sign.

The invention is primarily directed to a process for treating contaminated liquid, said process comprising the steps of:
a) contacting the liquid to be treated with a charged polymeric material and with a second, oppositely charged polymeric material, said polymeric materials being soluble in said liquid, and wherein at least one of said soluble polymeric materials is a branched polymeric material;
b) allowing floc formation; and
c) separating the flocs from the liquid.

While any suitable polymeric material may be used, in a preferred embodiment of the process of the invention, the first and second polymeric materials are selected from the group consisting of polysaccharides, proteins, lipids and polyhydroxy alcohols. Preferred polysaccharides are selected from the group consisting of xanthan gum, alginic acid, carageenan, carboxymethyl cellulose and guar gum.

Preferably, the first and second polymeric materials each have an average molar mass greater than 5,000 daltons. In a more preferred embodiment, the first and second polymeric materials each have an average molar mass greater than 90,000 daltons.

According to a preferred embodiment of the present invention, the negatively charged polymeric material is branched. Preferably, said negatively charged branched polymeric material is the first polymeric material to be contacted with the liquid, said branched polymeric material being capable of reducing the turbidity of the said liquid, or the concentrations of the contaminants by at least 5 %, wherein said polymeric material is provided at a concentration of between 1 and 500 ppm.

In one embodiment of the invention, the liquid to be treated is first contacted with the first polymeric material, and after an interval of time, contacted with the second polymeric material, said interval of time preferably being less than five minutes. As an alternative to this consecutive treatment, another embodiment of the invention provides for the liquid to be treated to be contacted with the first and second polymeric materials essentially simultaneously.

Preferably, each of the first and second polymeric materials is applied in a concentration in the range between 1 to 500 ppm.

Preferably, either one or both of the first and second polymeric materials used in the process of the present invention are of natural origin. While the polymeric materials may be obtained from many different and varied natural sources, in a preferred embodiment, they are obtained from organisms selected from the group consisting of algae, bacteria and crustacea.

One of the preferred polymeric materials for use in the disclosed process is the positively charged chitosan or branched N-acyl derivatives thereof, preferably N-Lauroyl chitosan.

A preferred negatively charged polymeric material is xanthan gum. Further preferred negatively charged polymeric materials are algal polysaccharides.

The process of the invention may be used to treat liquids containing many different types of contaminant. However, in one preferred embodiment, the liquid to be treated is water that contains contaminants which are metals. In a further preferred embodiment of the process, the liquid to be treated is water that contains contaminants which are organic compounds.

Although any suitable solid/liquid separation technique may be used for separating the flocs from the liquid (e.g. centrifugation, gravity sedimentation, dialysis, ethanol precipitation, lyophilization etc.), in a preferred embodiment of the invention, this separation is achieved by membrane filtration.

All the above and other characteristics and advantages of the invention will be further understood from the following illustrative and non-limitative examples of preferred embodiments thereof.

### Detailed Description of Preferred Embodiments

### Examples

### General Methods

***Microalgae and growth conditions.*** Two species of blue-green algae (cyanobacteria) were used, *Nostoc* sp. and *Phormidium,* both from the culture collection of the University of Texas. The algae were cultivated in 250-ml tubes in the appropriate growth medium [Kratz, W.A. & Myers, J. (1995) Ann. J. Bot. 49: 282; Shelef, G. & Soeder, C.J. (1980) "Algae biomass: production and use", Elsevier Holland Biomedical Press, Amsterdam, p.852]. Air containing CO₂ was supplied under control gas mixing with gas analysis monitoring as previously described [Shabtai, Y. (1990) Int. J. Biol. Macromol. 12: 145-152]. Continuous illumination was supplied by a battery of fluorescent lamps in a temperature-controlled room.

***Preparation of the bioflocculant.*** The bioflocculant was prepared according to the method described by Fattom, A. and Shilo, M. [Arch. Microbiol. 139: 421-426 (1984)]. The method includes separation by centrifuge, concentration, dialysis, ethanol precipitation, centrifugation, lyophilization and storage at room temperature. In the experiments, the bioflocculant was prepared for use by making an aqueous solution of the dry material. The term bioflocculant is used to indicate a polymer of natural origin, having flocculating activity, and employed according to the present invention.

***Assay of bioflocculant activity****.* The activity of the various bioflocculants (bioflocculants from different algae species or different stages of growth) is expressed as a function of the rate of settling of standard bentonite particles in an aqueous suspension, as described by Fattom and Shilo (1984) [*Ibid*.] The turbidity of the assay mixture was measured in a Klett Summerson colorimeter (Filter 54). The time required for a 50% decrease in initial turbidity is taken as the measure of flocculant activity.

***Water Analyses.*** Water analyses were done according to Standard Methods for Examination of Water & Wastewater (1985) and Fresenius, W.K.E. *et al*. (1988) [Water analysis: a practical guide to physico-chemical, chemical and microbiological water examination and quality assurance, Springer-Verlag, Berlin].

***Assay for removal of heavy metals.*** The efficiency of the bioflocculant in the removal of heavy metals was determined according to the method described by Logan and Traina (1993) [Trace metals in agriculture In: "Metals in Groundwater" pp.309-349, Lewis Publ., Chelsea, MI]. The concentration of the metals was determined by the method of Inductively Coupled Plasma (ICP) at the Laboratory of Materials Characterization, The Institutes for Applied Research, Ben-Gurion University of the Negev.

### Example 1

### Effect of treatment on water turbidity

### First polymeric material: anionic, branched polymeric material (derived from blue-green algae)

### Second polymeric material: cationic, unbranched polymer (chitosan)

The negatively charged, branched polymers were isolated from two species of blue-green algae, as described in "General Methods", above. Water samples were obtained from various sources, and their turbidity was measured both before and after treatment with the biopolymers. The standard jar test [Fresenius *et al*. (eds.) "Water analysis: a practical guide to physico-chemical, chemical and microbiological water examination and quality assurance", Springer-Verlag, Berlin (1988)].

Contaminated water (800 ml) was added to a Jar test container, and mixed at 150 rpm. After ten minutes of mixing the anionic polymer was added and after a further two minutes the cationic polymer was introduced.

The results of the treatment are given in Table I.

**Table I**

| **Water Source** | **Final Bioflocculant Concentration (ppm)** | **Turbidity of Untreated water (JTU)**^{**a)**} | **Turbidity of treated water (JTU)** |
|---|---|---|---|
| Tap water (control) | 1 | 0.39 | 0.41 |
| Clay-containing water from Mekorot Ltd. Pools in the Negev | 1 | 110 | 2.1 |
| Microalgae culture | 30 | 93 | 2.7 |
| Waste water from local Wastewater Treatment Plant | 30 | 61 | 7.5 |

| | | | |
|---|---|---|---|
| a) A standard Jar Test (JT) was performed to assess the removal of solids and clarification of the water [Fresenius *et al*. 1988, *ibid*]. | | | |

It may be seen from Table I that the algal biopolymer preparation in combination with chitosan reduced the turbidity of each of the three contaminated water samples tested. Since water turbidity is an indication of the purity or otherwise of the sample, these results indicate that the algal biopolymers used in the experiment described hereinbefore are effective in removing contaminants from water.

### Example 2

### Removal of organic compounds (TOC) and heavy metals in heavily contaminated industrial wastewater

### First polymeric material: anionic, branched polymeric material (derived from blue-green algae)

### Second polymeric material: cationic, unbranched polymer (chitosan)

Samples of heavily contaminated wastewater were taken from an industrial disposal site (Ramot Hovav, Israel). The concentrations (measured as ppm) of various metals and organic compounds (TOC) were measured both before treatment, and after each of two sequential treatment processes, each process using a mixed blue-green algae-derived negatively charged, branched polymeric material in combination with the positively charged chitosan, at a final concentration of 40 ppm.

TOC concentration was measured using the standard method previously described by Fresenius *et al*. (1988) [*ibid*.]. The concentration of heavy metals was measured in the supernatant that was decanted following the two bioflocculation stages. The results of this analysis are shown in Table II. It may be readily appreciated that even after only the first treatment, the concentrations of the contaminants measured are dramatically reduced.

**Table II**

| **Material** | **Before Treatment** | **After Treatment I** | **After Treatment II** |
|---|---|---|---|
| | | (ppm) | (ppm) |
| TOC | 17,500 | 1,450 | 180 |
| Al | 3,100 | 1.4 | <0.01 |
| Co | 9 | 0.2 | <0.01 |
| Cr | 6 | <0.1 | < 0.01 |
| Cu | 90 | 0.9 | 0.02 |
| Fe | 610 | 0.1 | <0.001 |
| Mn | 4,720 | 120 | 34 |
| Ni | 14 | 0.2 | <0.01 |
| Sb | 35 | <0.1 | <0.01 |
| Ti | 76 | 1.5 | <0.01 |
| Zn | 2,270 | 25 | 4 |

Values are average of two independent samples treated in stirred vessel by two sequential flocculation processes using algal bioflocculant (40ppm) from blue-green algae.

### Example 3

### Use of microbially-derived biopolymers to remove pesticides from the flushing water of spraying aircraft

### First polymeric material: anionic, branched polymer (derived from the bacteria xanthomons compestris) (xanthan gum)

### Second polymeric material: cationic, unbranched polymer (chitosan)

The above-mentioned polymers were used to treat the water used to flush pesticides from the delivery devices used in spraying aircraft. The treatment was similar to that of the preceding example.

The results (Table III) indicate that most toxic pesticides, (>90%), can be removed in a single bioflocculation step.

**Table III**

| **Compound present** | **Initial concentration of Pesticides (sample 2765)** | **Final Concentration of pesticides in supernatant after bioflocculation and precipitation (sample 2768)** | **Percent removal** |
|---|---|---|---|
| Diazinon | 0.72 | 0.0028 | 97 |
| Malathion | 213.0 | 0.05 | 99.9 |
| Endosulfan | 15.0 | Not detected | 100 |
| Hexaconazole | 1.9 | 0.54 | 73 |
| Bifenthrin | 0.43 | 0.02 | 95 |
| Cypermethrin | 80.0 | 0.048 | 99.9 |
| Buprofezin | 7.4 | 0.14 | 98 |
| Tebuconazole | 1.6 | 1.4 | 2.5 |
| Monocrotop | 66.9 | 0.07 | 99.9 |
| Parathion | 3.0 | Not detected | 100 |
| Triadimenol | 33.2 | 0.5 | 98.5 |
| Oxadixyl | Not detected | 0.1 | - |
| Cyproconazole | 0.57 | 0.7 | 0 |
| Terbutryn | 0.43 | Not detected | 100 |

### Example 4

### Sequential treatment of cattle-milking plant wastewater with xanthan gum and chitosan

### First polymeric material: anionic, branched polymer (xanthan gum)

### Second polymeric material: cationic, unbranched polymer (chitosan)

In an initial study, wastewater was taken from the drainage collecting pool of a cattle and milking plant. Samples (500 ml) were mixed vigorously (150 rpm) in 1 liter containers. A solution of xanthan gum (bacterial polysaccharide - Bioflocculant A) was added. Thirty seconds later a solution of chitosan (Biofloculant B) was added, following which immediate formation of flocs was observed. The polymers were used in 50 ppm concentration each. Mixing was stopped and the enlarging flocs settled rapidly to the bottom of the containers. The supernatant was decanted and analyzed for turbidity, biomass, BOD and residual nitrogen compounds, according to standard methods described by Fresenius *et al.* (1988) [*ibid.].*

In a separate study, the removal of organic materials from wastewater taken from cattle and milking plant was performed using the bioflocculation technique on a pilot scale system of 800 liters. The experiment was carried out at Kibbutz Tzor'a, Israel.

A stirred fiberglass vessel with a conical shaped bottom section was filled with 800 liters of wastewater from the cattle milking plant. A marine type impeller was used to mix the liquid during the addition of the bioflocculants. A solution of Bioflocculant A was added under vigorous mixing. One minute later a solution of Bioflocculant B was added. Bioflocculants were added to a final concentration of 50 ppm each. Immediately, flocs started to form. The mixing was stopped and the flocs were allowed to settle to the bottom conical section of the vessel. The clarified supernatant was decanted gradually through several discharge valves installed at different heights on the wall of the vessel. Samples of the resulting clear supernatant were analyzed for turbidity, Total Suspended Solids (TSS), BOD and residual nitrogen compounds were measured. The precipitated slurry of flocculated organic materials (also containing additional electrolytes or minerals) was removed and the volume and dry weight determined.

The results of both the pilot-scale experiments (samples 2 and 3) and the laboratory-scale experiment are shown in Table IV. Sample 1 is the pre-treatment sample used as a control for both the pilot-scale and laboratory-scale experiments.

**Table IV**

| **Sample #** | **Treatment** | **Turbidity** | **TSS** | **BOD** |
|---|---|---|---|---|
| | | (JTU) | (g/l) | (mg/l) |
| 1 | No treatment | 502 | 6.3 | 3994 |
| 2 | 30 min. after flocculation | 0.3 | 0.08 | 282 |
| 3 | 90 min after flocculation | 0.2 | 0.03 | 378 |
| 4 | Laboratory experiment | 0.2 | 0.03 | 532 |

a) Sample 1 and 2 were taken at different times from the clarified supernatant during flocs' precipitation.
b) Sample 4 was taken at the end of a laboratory experiment 30 min after flocculation for purifying cattle milking plant.

The results clearly show the dramatic reduction in turbidity, total suspended solids and BOD that occurs following the two-stage bioflocculant process.

### Example 5

### Comparison between a combination of two linear polymers and a combination containing a branched polymer according to the present invention

### First combination: anionic branched polymer (derived from algae) and a cationic unbranched polymer (chitosan)

### Second combination: anionic linear polyacrylamide and cationic linear polyacrylamide

Samples (500 ml) of pesticide-contaminated water (obtained from a reservoir for storing effluent created when tanks of crop-dusters were flushed with water) were mixed vigorously at 150 rpm in one liter containers (jar test). A solution of flocculant A, anionic natural branched polymeric material (derived from microalgae, according to the "General Methods") was added to the sample. Thirty seconds later, a solution of flocculant B, cationic natural polymer (chitosan) was also added to the sample. Formation of flocculants followed immediately. Mixing was stopped and the enlarging flocs settled rapidly to the bottom of the containers. The supernatant was decanted and analysed for pesticide types and concentrations and the results are given in Table V, for two final concentrations of the flocculants in the sample (50 ppm and 100 ppm).

For the purpose of comparison, a solution containing anionic synthetic linear polymer (polyacrylamide, manufactured by Stockhausen GMBH of Hüls group as PRAESTOL 2540 ) was added to a sample of pesticide-contaminated water, followed by the addition of a solution of cationic synthetic linear polymer (polyacrylamide, manufactured by Stockhausen GMBH of Hüls group as PRAESTOL 655 BC) after 30 seconds. The sample was treated in the same manner described above and the results of the analysis of the residual pesticides are given in Table V.

**Table V**

| Pesticide | Initial concentration of pesticide (mg/l) | Final concentration (mg/l) of pesticides | | | |
|---|---|---|---|---|---|
| | | After flocculation by Anionic and cationic polyacrylamide | | After flocculation by Polymers A +B of the invention | |
| | | 50 ppm | 100 ppm | 50 ppm | 100 ppm |
| Teflubenzoron | 200 | 65 (68) | 27 (87) | 0 (100) | 0 (100) |
| Flutriafol | 3100 | 2250 (27) | 1500 (52) | 700(77.4) | 145(95.3) |
| Oxadixyl | 80 | 83 (9) | 61 (24) | 47(41.2) | 20 (75) |
| Endosulfan | 150 | 150 (0) | 135 (10) | 0 (100) | 0 (100) |
| Malathion | 215 | 200 (7) | 197 (8) | 10 (95.3) | 0 (100) |
| Diazinon | 63 | 44 (30) | 36 (44) | 5 (92) | 0 (100) |
| Triadimenol | 140 | 215 (0) | 330 (0) | 22 (89) | 18 (92) |
| Metalaxyl | 300 | 200 (33) | 185 (38) | 69 (77) | 24 (92) |
| Monocrotophos | 77 | 52 (48) | 34 (56) | 7 (91) | 4 (95) |
| *The numbers in parenthesis indicate percentage pesticides removal. | | | | | |

It is apparent from Table V that the treatment according to the present invention, based on a combination of an anionic polymer and a cationic polymer from natural origin, provides superior results, both qualitatively and quantitatively, in comparison to a treatment based on a combination of synthetic polymers. The treatment according to the present invention caused the precipitation of all types of pesticides, even when the polymers were used in concentration of 50 ppm, whereas the method based on synthetic polymers failed to achieve this target. It is also apparent from the table that the percentage of removal of the contaminants from the sample is significantly higher employing the method of the present invention.

### Example 6

### A comparison between polyacrylamide flocculation system and the bioflucculants of the present invention.

***Methodology:*** a jar test was performed including 6 containers each containing 500 ml organic waste water. The rotation speed was set to 200 rpm and then the polymers were added as follows:

| | |
|---|---|
| Test 1 | 100 ppm cationic polymer (chitosan) |
| Test 2 | 100 ppm of anionic, branched polymer (polysaccharide derived from blue-green algae) |
| Test 3 | 50 ppm chitosan + 50 ppm of algal polysaccharide |
| Test 4 | 100 ppm of anionic, synthetic linear polymer (polyacrylamide) |
| Test 5 | 100 ppm of cationic, synthetic linear polymer (polyacrylamide) |
| Test 6 | 50 ppm of cationic polyacrylamide + 50 ppm of anionic polyacrylamide |

After treatment, the solutions were measured in Turbidimeter Model 2100A (HACH Chemical Company).

### Results:

**Table VI**

| **Test Number** | **Treatment** | **Turbidity in NTU** |
|---|---|---|
| 1 | chitosan | 27,500 |
| 2 | algal polysaccharide | 29,300 |
| 3 | chitosan + algal polysaccharide | 40 |
| 4 | anionic polyacrylamide | 29,400 |
| 5 | cationic polyacrylamide | 32,600 |
| 6 | anionic + cationic polyacrylamide | 22,730 |
| No treatment | | 34,038 |

While specific embodiments of the invention have been described for the purpose of illustration, it will be understood that the invention may be carried out in practice by skilled persons with many modifications, variations and adaptations, without departing from its spirit or exceeding the scope of the claims.

## Claims

1. A process for treating contaminated liquid, comprising:
b) contacting the liquid to be treated with a charged polymeric material and with a second, oppositely charged polymeric material, said polymeric materials being soluble in said liquid, and wherein at least one of said soluble polymeric materials is a branched polymeric material;
b) allowing floc formation; and
c) separating the flocs from the liquid.

2. A process according to claim 1, wherein the first and second polymeric materials are selected from the group consisting of polysaccharides, proteins, lipids and polyhydroxy alcohols.

3. A process according to claim 1, wherein the first and second polymeric materials each have an average molar mass greater than 5,000 daltons.

4. A process according to claim 3, wherein the first and second polymeric materials each have an average molar mass greater than 90,000 daltons.

5. A process according to claim 1, wherein the first polymeric material is a branched, negatively charged polymeric material.

6. A process according to claim 1, wherein the liquid to be treated is contacted consecutively with the first and second polymeric materials.

7. A process according to claim 1, wherein the liquid to be treated is contacted with the first and second polymeric materials essentially simultaneously.

8. A process according to claim 1, wherein the first and/or second polymeric materials are of natural origin.

9. A process according to claim 8, wherein the first and/or second polymeric materials are obtained from organisms selected from the group consisting of algae, bacteria and crustacea.

10. A process according to claim 1, wherein the liquid to be treated contains contaminants which are metals.

11. A process according to claim 1, wherein the liquid to be treated contains contaminants which are organic compounds.

12. A process according to claim 1, wherein one of the polymeric materials is selected from the group consisting of chitosan and branched N-acyl derivatives thereof.

13. A process according to claim 12, wherein the derivative is N-Lauroyl chitosan.

14. A process according to claim 1, wherein one of the polymeric materials is xanthan gum.

15. A process according to claim 1, wherein the flocs are separated from the liquid by membrane filtration.
